Europäisches Patentamt

European Patent Office

Office européen des brevets

(11) Publication number: **0 102 681**
**B1**

(12) **EUROPEAN PATENT SPECIFICATION**

(45) Date of publication of patent specification: **19.08.87**

(51) Int. Cl.⁴: **B 65 G 47/19**

(21) Application number: **83302497.9**

(22) Date of filing: **04.05.83**

(54) Vibrator feed for auger conveyor.

(30) Priority: **29.07.82 US 403079**

(43) Date of publication of application:
**14.03.84 Bulletin 84/11**

(45) Publication of the grant of the patent:
**19.08.87 Bulletin 87/34**

(84) Designated Contracting States:
**AT DE FR GB SE**

(56) References cited:
**DE-B-1 145 548**
**DE-B-1 905 990**
**US-A-2 631 969**
**US-A-2 800 252**
**US-A-3 050 215**

(73) Proprietor: **Fabricated Metals inc.**
**2401 Merced Street**
**San Leandro California (US)**

(72) Inventor: **Coleman, Clarence B.**
**5530 Fernhoff Road**
**Oakland California (US)**

(74) Representative: **Enskat, Michael Antony Frank**
**5 Richards Close**
**Hillingdon Middlesex UB10 0BT (GB)**

Courier Press, Leamington Spa, England.

## Description

This invention relates to a device for feeding powdered or granular material to an auger conveyor and more particularly concerns a vibratory, adjustable plate adapted to be positioned between the outlet of a hopper and a conveying trough to control the flow of finely divided particles of material.

It is difficult to obtain the controlled discharge of powdered or granular material because certain powdered materials have a tendency to cake and flow unevenly while other material that is made up of slightly larger grains will flow readily. Some materials require that the storage hopper be agitated or vibrated to assure flow while other materials will flow readily by gravity toward a discharge opening. The use of devices for vibrating storage hoppers or conveyor troughs to promote material flow is disclosed in the United States Patents to Wahl, No. 2,800,252 and No. 2,957,608; the United States Patent to Klueger, No. 2,631,969; and the United States Patent to Di Nuzzo, No. 2,800,256. The United States Patent to Vitkin, No. 2,801,773 discloses a mechanism for jiggling cotter pins in discharge openings of a plate to prevent the clogging of the passages, and the United States Patents to Euston, No. 319,684 and to Williams, No. 3,050,215 disclose a mechanism for vibrating a hopper to promote passage of material through openings defined by adjustable gates.

German Patent DE—B—1 145 548 discloses a hopper having a C-shaped vibratory member just above the lower opening therein. The vibratory member is mounted on an arm which extends into the hopper in the lower region thereof, through an orifice. A vibrator is coupled to the arm to vibrate the vibratory member independently of the hopper to promote the flow of material through the lower opening in the hopper into a receptacle.

It is an object of the invention to provide an improved hopper.

According to the present invention there is provided a device for controlling the flow of material from a discharge opening of a hopper comprising a vibratory member mounted adjacent the discharge opening in the path of movement of material leaving the hopper, and a means for vibrating the vibratory member independently of said hopper to effect movement of material through the discharge opening (as it is known from DE—B—1 145 548) characterised in that said vibratory member comprises a plate having a body portion with an opening therein aligned with the opening in said hopper and a flow-restricting section extending transversely of the opening in said body portion to control the rate at which material flows from said hopper to the discharge opening through said opening in said body portion.

According to the present invention there is provided in combination a hopper having an open lower end defining a discharge opening, material receiving means, a vibratory member disposed adjacent the discharge opening between said hopper and said material receiving means, means for vibrating the vibratory member independently of the material receiving means to effect movement of the material from the hopper to the material receiving means (as it is known from DE—B—1 145 548) characterised in that material receiving means comprises discharge means having a material-advancing section with opposed side walls and a surface disposed below said hopper to receive material discharged from the hopper and in that the vibratory member comprises a plate having an opening communicating said hopper with said material discharge means, said plate having an area at least as great as the area of the discharge opening of said hopper and said opening in the plate containing a flow restricting section for controlling the rate of flow of material from said hopper to said discharge means.

A device for controlling the flow of material from a hopper and embodying the present invention will now be described by way of example with reference to the accompanying diagrammatic drawings in which:

Figure 1 is a fragmentary diagrammatic side elevation of a device for handling powdered or granular material which incorporates the flow control device of the present invention.

Figure 2 is an enlarged diagrammatic section taken along line 2—2 of Figure 1.

Figure 3 is an enlarged fragmentary diagrammatic plan of the flow control device and the associated conveyor, the view being taken looking substantially in the direction indicated by arrows 3—3 of Figure 2.

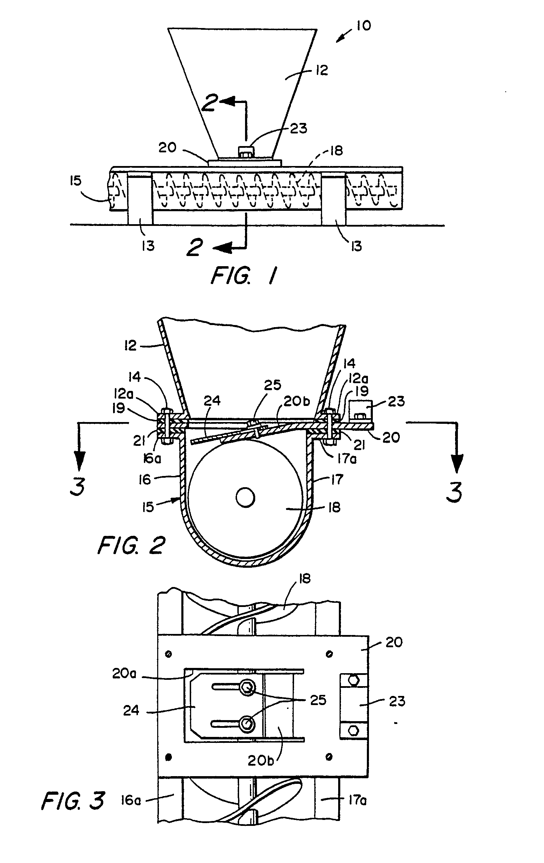

In Figure 1 the reference numeral 10 indicates generally a material feeding device incorporating the feed control mechanism of the present invention. The device of Figure 1 comprises a hopper 12 having an open lower end (Figure 2) defining a discharge opening located above a discharged material receiving surface of material discharge means. The material discharge means is in the form of a conventional screw conveyor that has a trough 15 defining the discharge material receiving surface and containing an auger 18. The trough 15 has spaced side walls 16 and 17 and is mounted on fixed supports (13). A vibratory member in the form of a control plate 20 is secured by bolts 14 between flanges 12a on the lower end of the hopper and flanges 16a and 17a on the upper ends of the walls of the trough 15. Gaskets 19 are disposed between each flange 12a and the control plate 20, and gaskets 21 are positioned between the control plate and the flanges 16a and 17a. The gaskets may be made of resilient material, such as rubber, so that the control plate can reciprocate in a generally horizontal plane relative to the trough under the urging of a vibrator 23 bolted to the plate. The vibrator may be of any conventional type, such as those having electrically driven vibrating masses which impart vibratory motion to the member to which they are attached.

The plate 20 has a body portion surrounding a rectangular opening 20a which extends transversely above the trough. When the vibrator 23 imparts vibratory movement to the plate, it also vibrates a flow restricting plate section 20b (Figure 2) that is bent downwardly from the plate proper to extend at an angle into the open upper end of the trough. Plate section 20b extends part way across the trough toward the wall 16, and a generally rectangular slotted metering plate 24 is adjustably secured to the upper surface of section 20b near the outer edge of that section by means of a plurality of screws 25 that extend through slots in plate 24 and are threaded into section 20b of the control plate 20. Accordingly, the distance between the outer edge of the metering plate 24 and the inner face of the wall 16 of the trough can be varied.

To prepare the control plate for operation with any particular material, the metering plate (24) is adjusted so that the opening between the outer edge of the plate and the wall 16 of the trough will prevent any substantial flow of that material through the opening when the vibrator 23 is inactive. Then, when the vibrator is energized, material will feed downwardly through the opening 20a and across the plate 20 and out the discharge opening between the plate and the wall. In this manner, not only the rate and quantity of material are controlled, but the flow characteristics of the material are improved due to the vibrating action.

## Claims

1. A device for controlling the flow of material from a discharge opening of a hopper (12) comprising a vibratory member mounted adjacent the discharge opening in the path of movement of material leaving the hopper (12), and a means (23) for vibrating the vibratory member independently of said hopper to effect movement of material through the discharge opening characterised in that said vibratory member comprises a plate (20) having a body portion with an opening (20a) therein aligned with the opening in said hopper (12) and a flow-restricting section (20b) extending transversely of the opening in said body portion to control the rate at which material flows from said hopper (12) to the discharge opening through said opening (20a) in said body portion.

2. The device of Claim 1 characterised in that the flow-restricting section of said plate (20) includes a plate section (20b) integrally formed with said body portion and a metering plate (24) adjustably secured at one edge of said plate section (20b) to control the rate at which material flows from said hopper (12) by way of said opening (20a) in said body portion.

3. The device of Claim 1 characterised in that said flow-restricting section (20b) of said plate (20) includes a section formed integrally with said body portion and extending across the opening (20a) in said plate (20) at an angle relative to said body portion to control the rate at which material flows from said hopper (12) by way of said opening (20a) in said body portion.

4. The device of Claim 1 characterised in that the plate (20) is mounted in a generally horizontal position and said flow-restricting section of said plate (20) includes a section integral with said body portion and extending across said opening (20a) in said body portion in a position inclined downwardly relative to said body portion to control the rate at which material flows from said hopper (12) by way of said opening (20a) in said body portion.

5. A device as claimed in any one of Claims 1 to 4 characterised in that the vibrating means (23) imparts a reciprocating movement to said plate (20) to move the material contacting said plate (20) in a direction parallel to said plate (20).

6. In combination a hopper having an open lower end defining a discharge opening, material receiving means, a vibratory member disposed adjacent the discharge opening between said hopper and said material receiving means, means for vibrating the vibratory member independently of the material receiving means to effect movement of the material from the hopper to the material receiving means characterised in that material receiving means comprises discharge means (15) having a material-advancing section with opposed side walls (16, 17) and a surface disposed below said hopper (12) to receive material discharged from the hopper (12), and in that the vibratory member comprises a plate (20) having an opening (20a) communicating said hopper (12) with said material discharge means (15), said plate (20) having an area at least as great as the area of the discharge opening of said hopper (12) and said opening (20a) in the plate (20) containing a flow restricting section (20b, 24) for controlling the rate of flow of material from said hopper (12) to said discharge means (15).

7. The combination of Claim 6 characterised in that flow-restricting section includes a portion extending across said opening (20a) in said plate (20) and inclined downwardly through the discharge opening in the hopper towards one of the opposed side walls (16, 17) of said material discharge means (15) to co-operate with said side walls (16, 17) to control the rate at which material flows from said hopper (12) to said material discharge means.

8. The combination as claimed in Claim 6 or Claim 7 characterised by means (14, 19, 21) securing said hopper (12) and said material discharge means (15) to one another.

## Patentansprüche

1. Vorrichtung zum Steuern des Materialflusses aus der Ausschüttöffnung eines Speisetrichters (12) mit einem Vibratorelement, das neben der Ausschüttöffnung im Weg der Bewegung des den Speisetrichter (12) verlassenden Materials befestigt ist, und mit Einrichtungen (23) zum In-Schwingungen-Versetzen des Vibrationselementes unabhängig von dem Speisetrichter um eine Bewegung des Materials durch die Ausschüttöffnung zu bewirken, dadurch gekennzeichnet, daß das Vibrationselement über eine Platte (20) mit einem Körperteil verfügt, das eine Öffnung (20a) darin, die auf die Öffnung in dem Speisetrichter (12) ausgerichtet ist, und einen Flußbegrenzungsabschnitt (20b) aufweist, die sich quer zur Öffnung in dem Körperteil erstreckt, um die Geschwindigkeit zu steuern, mit der Material von dem Speisetrichter (12) zur Ausschüttöffnung durch die Öffnung (20a) im Körperteil fließt.

2. Vorrichtung nach Anspruch 1, dadurch gekennzeichnet, daß der Flußbegrenzungsabschnitt der Platte (20) einen Plattenabschnitt (20b), der einstückig mit dem Körperteil gebildet ist, und eine Einstellplatte (24) aufweist, die justierbar an einer Kante des Plattenabschnittes (20b) befestigt ist, um die Geschwindigkeit zu steuern, mit der das Material aus dem Speisetrichter (12) über die Öffnung (20a) in den Körperteil fließt.

3. Vorrichtung nach Anspruch 1, dadurch gekennzeichnet, daß der Flußbegrenzungsabschnitt (20b) der Platte (20) einen Abschnitt umfaßt, der einstückig mit dem Körperteil gebildet ist, und sich über die Öffnung (20a) in der Platte (20) mit einem relativen Winkel zu dem Körperteil erstreckt, um die Geschwindigkeit zu steuern, mit der Material aus dem Speisetrichter (12) über die Öffnung (20a) in den Körperteil fließt.

4. Vorrichtung nach Anspruch 1, dadurch gekennzeichnet, daß die Platte (20) in einer im wesentlichen horizontalen Stellung befestigt ist und der Flußbegrenzungsabschnitt der Platte (20) einen mit dem Körperteil einstückigen Abschnitt aufweist, der sich über die Öffnung (20a) in dem Körperteil in einer in Bezug auf den Körperteil nach unten geneigten Position erstreckt, um die Geschwindigkeit zu kontrollieren, mit der das Material aus dem Speisetrichter (12) über die Öffnung (20a) in den Körperteil fließt.

5. Vorrichtung nach einem der Ansprüche 1 bis 4, dadurch gekennzeichnet, daß die Vibrationseinrichtung (23) der Platte (20) eine Hin- und Herbewegung verleiht, um das die Platte (20) berührende Material in einer Richtung parallel zu der Platte (20) zu bewegen.

6. Kombination eine Speisetrichters mit einem eine Ausschüttöffnung umgebenden offenen unteren Ende, mit einer Materialaufnahmeeinrichtung, mit einem Vibrationselement, das neben der Ausschüttöffnung zwischen dem Speisetrichter und der Materialaufnahmeeinrichtung angeordnet ist, mit einer Vibrationseinrichtung zum In-Schwingungen-Versetzen des Vibrationselementes unabhängig von der Materialaufnahmeeinrichtung, um eine Bewegung des Materials von dem Speisetrichter zur Materialaufnahmeeinrichtung zu bewirken, dadurch gekennzeichnet, daß die Materialaufnahmeeinrichtung über Ausschütteinrichtungen (15) verfügt, die einen Materialvorschubabschnitt mit gegenüberliegenden Seitenwänden (16, 17) und eine Oberfläche aufweist, die unter dem Speisetrichter (12) angeordnet ist, um Material aufzunehmen, das von dem Speisetrichter (12) ausgegeben wurde, daß das Vibratorelement eine Platte (20) umfaßt, die eine Öffnung (20a) aufweist, welche den Speisetrichter (12) mit der Materialausschütteinrichtung (15) verbindet, wobei die Platte (20) eine Fläche aufweist, die wenigstens so groß ist wie die Ausschüttöffnung des Speisetrichters (12) und daß die Öffnung (20a) in der Platte (20) einen Flußbegrenzungsabschnitt (20b, 24) zum Steuern der Materialflußgeschwindigkeit von dem Speisetrichter (12) zu den Ausschütteinrichtungen (15) aufweist.

7. Kombination nach Anspruch 6, dadurch gekennzeichnet, daß der Flußbegrenzungsabschnitt einen Teil umfaßt, der sich über die Öffnung (20a) in der Platte (20) nach unten geneigt über die Ausschüttöffnung in dem Speisetrichter in Richtung auf eine der sich gegenüberstehenden Seitenwände (16, 17) der Materialausschütteinrichtung (15) erstreckt, um mit den Seitenwänden (16, 17) zusammenzuwirken, um die Materialflußgeschwindigkeit von dem Speisetrichter (12) zu der Materialausschütteinrichtung zu steuern.

8. Kombination nach Anspruch 6 und 7, gekennzeichnet durch Einrichtungen (14, 19, 21), die den Speisetrichter (12) und die Materialausschütteinrichtung (15) miteinander verbinden.

**Revendications**

1. Dispositif pour régler l'écoulement de matériau à partir d'une ouverture de déversement d'une trémie (12) comportant un élément vibrant monté à proximité de l'ouverture de déversement dans la zone de déplacement du matériau quittant la trémie (12) et un moyen (23) pour faire vibrer l'élément vibrant indépendamment de ladite trémie pour réaliser le mouvement du matériau à travers l'ouverture de déversement, caractérisé en ce que l'élément vibrant comporte une plaque (20) ayant un corps muni d'une ouverture (20a) en alignement avec l'ouverture de ladite trémie (12) et une section (20b) de limitation d'écoulement s'étendant en direction transversale de l'ouverture dans ledit corps pour régler la vitesse à laquelle du matériau s'écoule de ladite trémie (12) vers l'ouverture de déversement au travers de ladite ouverture (20a) dudit corps.

2. Dispositif selon la revendication 1, caractérisé en ce que la section de limitation d'écoulement de ladite plaque (20) englobe une section plane (20b) venue de matière avec ledit corps et une plaque de réglage (24) fixée de manière réglable sur un bord de ladite section plane (20b) pour régler la vitesse à laquelle du matériau s'écoule de ladite trémie (12) via ladite ouverture (20a) dudit corps.

3. Dispositif selon la revendication 1, caractérisé en ce que ladite section de limitation d'écoulement (20b) de ladite plaque (20) comporte une section venue de matière avec ledit corps et s'étendant au travers de l'ouverture (20a) de ladite plaque (20) selon un angle par rapport audit corps pour regler la vitesse à laquelle du matériau s'écoule de ladite trémie (12) via ladite ouverture (20a) dudit corps.

4. Dispositif selon la revendication 1, caractérisé en ce que la plaque (20) est montée en une position généralement horizontale et que ladite section de limitation d'écoulement de ladite plaque (20) comporte une section venue de matière avec ledit corps et s'étendant au travers de l'ouverture (20a) dudit corps selon une position inclinée vers le bas par rapport audit corps pour régler la vitesse à laquelle du matériau s'écoule de ladite trémie (12) via ladite ouverture (20a) dudit corps.

5. Dispositif selon l'une quelconque des revendications 1 à 4, caractérisé en ce que le moyen vibrant (23) confère un mouvement alternatif à ladite plaque (20) pour déplacer le matériau en contact avec ladite plaque (20) dans une direction parallèle à ladite plaque (20).

6. Ensemble constitué par la combinaison de:
— une trémie ayant une extrémité inférieure ouverte définissant une ouverture d'écoulement,
— un moyen pour recevoir du matériau,
— un élément vibrant disposé à proximité de l'ouverture d'écoulement entre ladite trémie et ledit moyen pour recevoir du matériau,
— un moyen pour faire vibrer l'élément vibrant indépendamment du moyen de réception du matériau pour effectuer le mouvement du matériau à partir de la trémie vers le moyen de réception du matériau,
caractérisé en ce que le moyen de réception du matériau comporte un moyen d'écoulement (15) ayant une section d'avance du matériau avec des parois latérales opposées (16, 17), et une surface disposée en dessous de ladite trémie (12) pour recevoir la matériau s'écoulant de la trémie (12) et en ce que l'élément vibrant comporte une plaque (20) ayant une ouverture (20a) faisant communiquer ladite trémie (12) avec ledit moyen d'écoulement de matériau (15), ladite plaque (20) ayant une surface au moins aussi grande que la surface de l'ouverture d'écoulement de ladite trémie (12) et ladite ouverture (20a) de la plaque (20) comportant une section de limitation d'écoulement (20b, 24) pour régler la vitesse de déversement du matériau de ladite trémie (12) vers ledit moyen d'écoulement (15).

7. Ensemble selon la revendication 6, caractérisé en ce que la section de limitation d'écoulement comporte une partie s'étendant au travers de ladite ouverture (20a) de ladite plaque (20) et inclinée vers le bas au travers de l'ouverture d'écoulement dans la trémie en direction de l'une des parois latérales opposées (18, 17) dudit moyen d'écoulement du matériau (15) pour coopérer avec lesdites parois latérales (16, 17) de manière à régler la vitesse à laquelle le matériau s'écoule de ladite trémie (12) vers ledit moyen d'écoulement du matériau.

8. Ensemble selon l'une quelconque des revendications 6 ou 7, caractérisé en ce qu'il comporte des moyens (14, 19, 21) pour fixer ladite trémie (12) et ledit moyen d'écoulement de matériau (15) l'un à l'autre.

FIG. 1

FIG. 2

FIG. 3